# EUROPEAN PATENT APPLICATION

(11) **EP 4 738 792 A1**
(43) Date of publication of application: **06.05.2026**
(21) Application number: 25211497.0
(22) Date of filing: 27.10.2025
(51) Int. Cl.: H04L 51/02, H04L 51/216, H04L 51/04, H04L 12/18

(54) **NON-TRANSITORY MACHINE-READABLE STORAGE MEDIUM, METHOD AND APPARATUS FOR CHAT MANAGEMENT**

(30) Priority: 04.11.2024 US 202418935713
(71) Applicant: INTEL Corporation, Santa Clara, CA 95054 (US)
(72) Inventor: VAUGHN, Robert, Portland, 97229 (US)
(74) Representative: 2SPL Patentanwälte PartG mbB

(57) **Abstract**

Provided is a computer-readable medium including computer-readable instructions. When the instructions are executed by a computer, the computer may implement a method. According to this method, contextual information of a plurality of users in a conversation is generated based on messages from the plurality of users over a period of time. Then the contextual information of the plurality of users is sent to a first artificial intelligence (AI) language model as input for training the Al language model and a request is sent to the first Al language model, wherein the request requires a response associated with the contextual information.

## Description

### Background

In the scenario of integrating multiple users into one chat session, some language models either lack the capability or are weak at facilitating multi-user interactions within a single session, which may limit their potential for collaborative, dynamic, and contextually rich communication experiences.

### Brief description of the Figures

Some examples of apparatuses and/or methods will be described in the following by way of example only, and with reference to the accompanying figures, in which
Fig. 1A shows a schematic figure of an example of system 100A for Al-based chat management.
Fig. 1B shows a schematic figure of an example of system 100B for Al-based chat management.
Fig. 1C shows a schematic figure of an example of system 100C for Al-based chat management.
Fig. 2 shows an example of method 200 of Al-based chat management.
Fig. 3 shows an example of method 300 of Al-based chat management.
Fig. 4 shows an example of method 400 associated with Al-based chat management using tokens.
Fig. 5 shows an example of method 500 associated with generation of adaptive responses in Al-based chat.
Fig. 6 shows an example of method 600 associated with memory and data management in Al-based chat.
Fig. 7 shows a block diagram of an example of apparatus 700.
Fig. 8 shows a block diagram of an example of apparatus 800.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures identical or similar reference numerals refer to identical or similar elements and/or features, which may be identical or implemented in a modified form while providing the identical or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the identical combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the identical function. If a function is described below as implemented using multiple elements, further examples may implement the identical function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example," "various examples," "some examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may be not in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the identical or different examples. Furthermore, the terms "comprising," "including," "having," and the like, as used with respect to examples of the present disclosure, are synonymous.

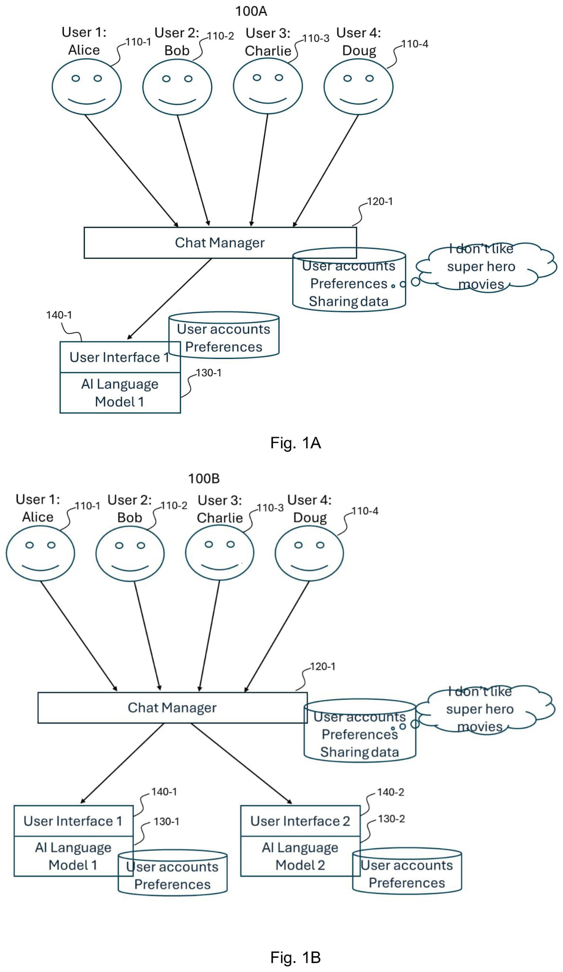

Fig. 1A shows a schematic figure of an example of a system 100A for Al-based chat management.

In some examples, system 100A may include a plurality of users 110, such as user 1 Alice 110-1, user 2 Bob 110-2, user 3 Charlie 110-3 and user 4 Doug 110-4, a chat manager 120-1, an Al language model 1 130-1 and a user interface 1 140-1.

In some examples, each of the users 110 may refer to a terminal device used by the user. For example, the terminal devices may be personal computers (PCs), smartphones, laptops, tablets, and/or smart wearables. In some examples, the users 110 may be participants of a chat. In some examples, the chat may be name communication or conversation.

In some examples, the chat manager 120-1 may be a system designed to manage interactions in multi-user conversations involving at least one Al language model 130-1, such as a large language model (LLM). It may serve as an intermediary or manager to facilitate the flow of communication among multiple participants in a chat, ensuring that each user's inputs are organized, sequenced, and processed by the LLM. In some examples, the chat manager may be a GUI interface or API layer, whose role may be to coordinate messages, manage user identities, and/or make responses from the Al model are contextually relevant to the conversation. The chat manager 120-1 may run on a server or cloud infrastructure including at least one processor and one memory storing machine-readable instructions to implement the functions or operations of the chat manager 120-1. In some examples, the chat manager 120-1 may act as a service that all participants of a chat connect to. In the examples, with support from the Al language model 1 130-1, the chat manager 120-1 may operate as another participant or user in the conversation, to whom some or all of the users in the chat may communicate. In some examples, the chat manager 120-1 may not only share data between users and the Al language model, but also may share data across the participants, such as Alice, Bob, Charlie. For example, the chat manager may share data with appropriate users while maintaining context and message flow. In some examples, the chat manager 120-1 may manage, based on user accounts, which users are participating in the chat, what privileges they have, and what data or conversations they are involved in. The user accounts may refer to the profiles and/or settings that users interact with directly via their respective interfaces, such as User Interface 1 for Alice, Bob, etc.).

In some examples, the Al language model 130-1 may be configured to process and generate responses in multi-user chat interactions. In some examples, the Al language model 130-1 may process multi-user interactions, which may include maintaining conversation history and relevant side conversations. It may further, in some examples, handle both group conversation, which may be a master session, and private contexts, which may refer to a plurality of sub-sessions respectively corresponding to a plurality of users, of individual users. In some examples, the Al language model may allocate distinct memory spaces for each user's private context and the overall group conversation. This may make private information to be kept separate and secure, while still being relevant to the broader conversation. In some examples, the Al language model may allow private information from individual sub-sessions to inform group conversations, without revealing sensitive data to other participants. In some examples, users may share private information with the Al language model, keeping the private information hidden from other participants, while still being utilized to generate personal responses. In some examples, the Al language model may be a ChatGPT model or instance provided by OpenAl, a Gemini model or instance provided by Google, or another Al language model. In some examples, the Al language model may be implemented on a server or cloud infrastructure.

In some examples, the user interface 140-1 may act as a mediator that implements user communication with the Al language model 130-1. The user interface 140-1 may manage input and output flows, handle private and public communications, protecting privacy of users, organize the conversation context, and/or making users to interact efficiently with the Al language model in both group communications and private communications. In some examples, the user interface may be implemented on a server or cloud infrastructure.

In some examples, the Al language model 130-1 and/or the user interface 140-1 may store user's preferences, such as "I don't like superhero movies," data and account-specific details based on user account, making information of different users to be stored in an organized way.

In some examples, the preference used by and/or stored in the chat manager 120-1, the Al language model 130-1, and the user interface 140-1 may refer to the individualized settings that personalize the interaction for each user.

Fig. 1B shows a schematic figure of an example of system 100B for Al-based chat management.

In some examples, system 100B may include system 100A and further include at least Al language model 2 130-2, where the further Al language model and the Al language model 130-1 may be of different types. In some examples, two or more Al language models, such as models 130-1 and 130-2, may interact with users through the chat manager 120-1. Each user may interact with one or more Al models, depending on configurations on the chat manager 120-1 and/or the selection by users. The two or more Al language models, such as models 130-1 and 130-2 being of different types, may be configured to or modified to support data sharing and coordination between different models through the chat manager. The chat manager may facilitate and manage these interactions associated with sharing across two or more Al language models of different types. In some examples, the Al language model 1 130-1 may ChatGPT provided by OpenAI and the Al language 2 130-2 may be Gemini provided by Google.

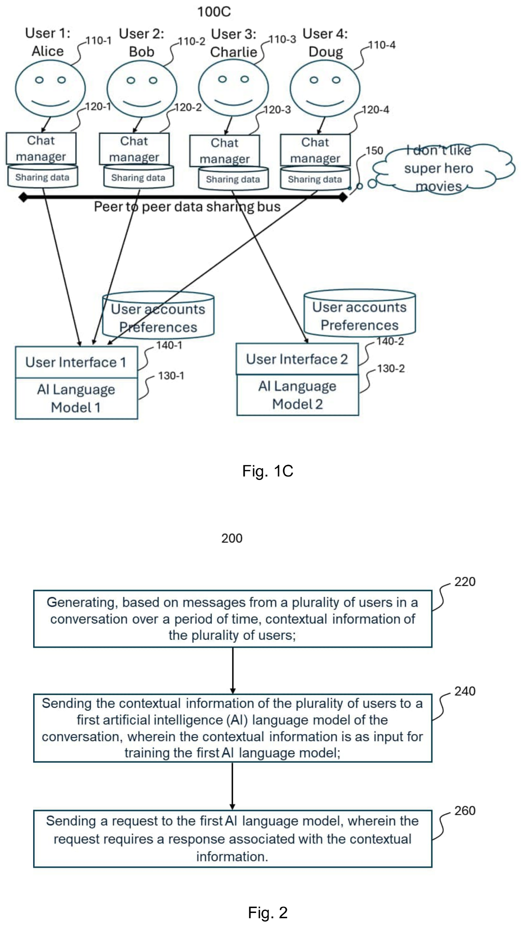

Fig. 1C shows a schematic figure of an example of system 100C for Al-based chat management. In some examples, the difference between system 100C and system 100B may include the difference between chat managers of these two systems. In some examples, system 100C may include a plurality of chat managers, such as chat managers 120-1 to 120-4, being coupled with a plurality of users, such as users 110-1 to 110-4, respectively. The plurality of chat managers 120-1 in Fig. 1C may operate as an intermediary, handling coordination, data sharing, and management of user inputs, preferences, and responses, but without the need to change the internal workings of the Al models. In some examples, the system 100C may require no changes to the backend Al language models with how they share data through and with an intermediary chat manager. In some examples, a peer-to-peer data sharing bus is configured to implement a more flexible and decentralized data-sharing approach. In some examples, the chat manager may coordinate data exchange between users and Al models via this bus, but it may not require changes to how the Al models operate. The peer-to-peer approach may enable data sharing without directly altering the models' architectures, making it easier to integrate multiple Al models and manage the flow of conversation data across users.

Fig. 2 shows an example of method 200 of Al-based chat management.

In some examples, a computer readable memory, in which computer-readable instructions are stored, is provided. The computer readable memory may be coupled with a processing unit and the computer-readable instructions may cause, when implemented by the processing unit, the processing unit to implement method 200 and more operations associated with method 200. In some examples, the processing unit may include one or more processors. Operations of method 200 and other operations associated with method 200 implemented by the processing unit may be implemented directly by the processing unit or may be caused or triggered by the processing unit. In some examples, the method 200 may be implemented by a chat manager, such as chat manager 120-1 in Figs. 1A to 1C.

In some examples, method 200, which may be implemented by chat manager 120 of a conversation, may comprise operations 220, 240 and 260. In some examples, operation 220 may comprise generating, based on messages from a plurality of users in the conversation over a period of time, contextual information of the plurality of users. In some examples, operation 240 may comprise sending the contextual information of the plurality of users to a first artificial intelligence (AI) language model of the conversation, wherein the contextual information is generated over the period of time and is sent as input for training the first Al language model. In some examples, operation 260 may comprise sending, after transmission of the contextual information of the plurality of users, a request to the first Al language model, wherein the request requires a response associated with the contextual information.

In some examples, the request may require some information included in the contextual information. In some examples, the request may require some information that may be edited, such as summarized, re-organized and/or anticipated, information based on the contextual information. The summarization, reorganization and/or anticipation may be made by an Al language model receiving the contextual information as input for training.

In some examples, the request sent to the first Al language model may be a request sent by a user or a request originated by the chat manager. The request may be a question for the first Al language model to answer.

In some examples, the chat manager may receive a response from the Al language model, where the response may be a response to the request in operation 260. In some examples, the chat manager may further send the response from the Al language model to some or all users in the conversation. In some examples, the response may be an answer to a question for the first Al language.

In some examples, an Al language model may be a Large Language Model (LLM). In some examples, there are different LLMs having different specifications and/or different capabilities. For example, Open AI provides an LLM named Chatgpt and Google provides an LLM named Gemini.

In some examples, the contextual information of the plurality of users may be generated based on time sequence of receiving the messages from the plurality of users. For example, when messages from different users are received at different time points, the received messages may be listed in a sequence determined based on the time points of receiving the messages. In some examples, message 1.1 from user 1 is received at time point 1, message 2.1 from user 2 is received at time point 2, message 3.1 from user 3 is received at time point 3, and message 2.2 from user 2 is received at time point 4, where time points 1 to 4 are from early to late in the series. In an example, contextual information based on messages 1.1, 2.1, 3.1 and 2.2 may be a list of messages 1.1, 2.1, 3.1, and 2.2 arranged in the order they are received. In another example, contextual information based on messages 1.1, 2.1, 3.1 and 2.2 may be four pieces of information respectively generated based on messages 1.1, 2.1, 3.1 and 2.2 and arranged in the order the messages are received.

In some examples, the contextual information of the plurality of users may be generated based on meaning of the messages from the plurality of users. For example, based on the meaning of the messages from the plurality of users, the chat manager may remove redundant information from the messages. In an alternative or a further example, the chat manager may organize the messages in an order according to the logic among the messages. The further example may mean that it can be combined with one or more precedent examples.

In some examples, before the chat manager starts the conversation for the first user, the chat manager may receive a first request for starting the conversation for the first user. As a response to the first request, the chat manager may establish the conversation for the first user and assign a first toke corresponding to the conversation to the first user. In some other examples, the chat manager may establish a conversation before receiving the first request from the first user. When the first request is received by the chat manager, the chat manager may make the first user join the conversation and assign the first token to the first user.

In some examples, the first user may share the token with one or more other users. For example, the first user may share the token with a plurality of other users that the first user trusts for having a conversation together.

In some examples, the chat manager may receive a second request for joining the conversation for a second user, where the second request comprises the first token. The second request may indicate that the second user wants to join the conversation that the first user is in. In some examples, the second request is sent by the second user itself. In some examples, after the first user receives the first token assigned by the chat manager, the first user may share the first token with the second user. The second user may obtain a second token based on the first token. In some examples, sharing the first token may refer to sharing one or some sections of the first token, such as the conversation identifier, rather than the whole first token.

In some examples, the second token and the first token may have the same conversation identifier corresponding to the conversation. Besides the conversation identifier, the first token may include the identifier of the first user and the second token may include the identifier of the second token.

In some examples, based on the second token, the chat manager may make a determination on whether allowing the second user to join the conversation. In some examples, if the second request does not comprise a token at all, the second user will not be allowed to join the conversation. In some examples, if the second request comprises a token, the chat manager may further determine whether the token comprise a conversation identifier of the conversation that the first user is in. If the conversation identifier exists, the chat manager may allow the second user to join the conversation or do additional checks. If the conversation identifier does not exist, the chat manager may not allow the second user to join the conversation. In some examples, the second token may have the conversion identifier and further have an identifier of the second user. In a token, an identifier of a user may be named a participant identifier.

In some examples, a token may be encrypted for the transmission of the token. For example, before the first token is shared or the second token is sent from the second user to the chat manager, each or one of the first token and the second token may be encrypted. The encryption may improve the security of the use of tokens. In some examples, a token or every token may comprise encryption metadata for decrypting the token.

In some examples, the chat manager may establish a plurality of sub-sessions coupling the plurality of users respectively with a plurality of dedicated Al language model instances. For example, when a conversation includes 3 users, the chat manager may establish 3 sub-sessions, each sub-session is coupled with one of the 3 users, such as sub-session 1 is coupled with user 1 and an Al language model instance 1 dedicated to user 1, sub-session 2 is coupled with user 2 and an Al language model instance 2 dedicated to user 2, and sub-session 3 is coupled with user 3 and an Al language model instance 3 dedicated to user 3. In some examples, the Al language model instances are different instances of the Al language model. In some examples, the sub-sessions may couple the dedicated Al language model instances with the chat manager being coupled with a plurality of users, so that the sub-sessions may be coupled with the plurality of users via the chat manager. In some examples, an Al language model instance may be named an Al instance.

In some examples, the chat manager may send private contextual information of each of the plurality of users to a corresponding dedicated Al language model instance through a corresponding sub-session of each of the plurality of sub-sessions. For example, the chat manager may receive private contextual information of the plurality of users. In a particular example, the chat manager may receive private contextual information 1 of user 1, private contextual information 2 of user 2 and private contextual information 3 of user 3. In some examples, the chart manager may send private contextual information 1 to Al instance 1 via sub-session 1, send private contextual information 2 to Al instance 2 via sub-session 2, and send private contextual information 3 to Al instance 3 via sub-session 3.

In some examples, based on the private contextual information of a user, a corresponding dedicated Al instance may obtain the capability of using the private contextual information of the user to answer some questions.

In some examples, as the private contextual information is provided to a dedicated Al instance, not to a public Al language model or a public Al instance, the privacy of the user may not be leaked out. Furthermore, in some examples, the answer to the question may not include private information of the user or other users.

In some examples, after the chat manager receives a request from a user in the conversation, the chat manager may send the request to a dedicated Al instance of the user. The dedicated Al instance may send a response, such as an answer to a question included in the request, to the chat manager.

In some other examples, the chat manager may send the request from the user to a plurality of dedicated Al instances respectively corresponding to a plurality of users in the conversation and then receive a plurality of responses from the plurality of dedicated Al instances. Although the request may be from user 1, the dedicated Al instances of user 2, user 3, and user 4 may still possibly give respective responses based on the information they received from user 2, user 3 and user 4. The responses may not disclose the private information of any user.

In some examples, the chat manager may import the received one or more responses to a public session holding chat messages available to a plurality of users in the conversation. The one or more responses may be a response from the Al instance dedicated to the user, or a plurality of response from a plurality of Al instance respectively dedicated to a plurality of users of the conversation. In some examples, the process of importing the responses may include sanitizing the plurality of response and merging the sanitized responses with public messages from the user in the public session. In some examples, sanitization may ensure privacy and data protection, prevent inappropriate or harmful content, and/or improve accuracy and reliability. The sanitization may be implemented based on statistical rules and/or an Al model.

In some examples, users may send their private contextual information to the chat manager via private sub-sessions between the users and the chat manager.

In some other examples, the private contextual information is sent to the chat manager together with public contextual information. Therefore, the chat manager may determine, based on a semantic analysis, the private contextual information of the plurality of users from overall information sent from the plurality of users. The overall information may include both private contextual information and public contextual information. In some examples, the private contextual information and the public contextual information are in a private session; and in some other examples, the private contextual information and the public contextual information are in a public session.

In some examples, to protect the privacy of private information, the public contextual information and the private contextual information may be stored separately. For example, the chat manager may allocate a shared memory for public contextual information from the plurality of users in the conversation. The chat manager may further allocate a plurality of dedicated memories for each of the plurality of users in the conversation for respectively storing private contextual information of different users. It may indicate that each user may be allocated a dedicated memory for storing the private contextual information of the user. Such allocation of memories may protect private contextual information from being leaked and/or amended.

In some examples, the chat manager may receive an access request for accessing a first dedicated memory of the first user. The first dedicated memory may be a memory dedicated to store private contextual information of the first user. In some examples, the access request may be sent by the first Al model. The chat manager may determine the intention for accessing the first dedicated memory. In some examples, if the intention is for generating a response to a request sent by the first user, the chat manager may allow access to the first dedicated memory assigned for the first user. In some examples, if the intention is not for generating the response, the chat manager may reject the access request.

In some examples, after the conversation terminates, the chat manager may delete, responsive to the termination of the conversation, private information of the plurality of users stored in the plurality of dedicated memories. In an exemplary situation, dedicated memories 1, 2, 3 and 4 respectively store private contextual information of users 1, 2, 3 and 4 in a conversation. Responsive to the termination of the conversation, the chat manager may delete private contextual information of users 1, 2, 3 and 4 respectively stored in the dedicated memories 1, 2, 3 and 4. The private contextual information of a user may include private messages provided by the user or information obtained from the private messages provided by the user.

In some examples, the chat manager, such as chat manager 120-1, may be further coupled with a second AI language model, such as Al language model 2 130-2. The chat manager may send contextual information of an additional user to the second Al language model. The chat manager may further receive information associated with the additional user, such as user 2 110-2, user 3 110-3, or user 4 110-4, from the second Al language model. In some examples, the information associated with the additional user may include information provided by the second Al language model based on the contextual information of the additional user and a request, such as a question, about the additional user. In some examples, the types of the first and second Al language models are different, and one Al language model may not recognize the information in a format of other Al language model. Therefore, in some examples, the Al language model, such as Al language model 130-2, sharing information to another Al language model, such as Al language model 130-1, may change, based on characteristics of the Al language model receiving the shared information, the format of the information to be shared from a format of the Al language model, such as Al language model 130-2, sharing information to a format of the Al language model, such as Al language model 130-1, receiving the shared information. The chat manager 120-1 may receive the information in the format of the Al language model receiving the information, such as model 130-1, and send the received information to the Al language model receiving the information, such as model 130-1.

In some examples, the chat manager 120-1 may receive information the model 130-1 shares to the model 130-2. The model 130-1 may change the format of the information from a format of model 130-1 to a format of model 130-2. The chat manager 120-1 may receive the information in the format of model 130-2 and then send it to the model 130-2.

In some examples, besides the chat manager 120-1, the network may further comprise one or more other chat managers, such as chat manager 120-2 to 120-4 in Fig. 1C. The plurality of chat managers, such as chat managers 120-1 to 120-4, may respectively correspond to a plurality of users, such as users 110-1 to 110-4, each of the chat managers receiving one or more messages from its corresponding user. In some examples, each of the chat managers 120 may share information based on the messages it receives with other chat managers of the plurality of chat managers. In some examples, the sharing among the plurality of chat managers, chat manager 120-1 to 120-4, may be based on a peer-to-peer data sharing bus 150 coupled with the plurality of chat managers. In some examples, Alice, Bob, and Charlie may interact with multiple Al models and each user may have specific preferences or context that it wants to share only with a certain model. In such examples, the peer-to-peer data sharing bus 150 may enable Alice's preference to be securely shared with the appropriate Al model that is handling her queries. The peer-to-peer data sharing bus 150 may further enable Bob's and Charlie's messages to be shared in real-time with other participants and models, without a central manager becoming a bottleneck. Moreover, the peer-to-peer data sharing bus 150 may enable Al models to communicate and exchange relevant data about the conversation without modifying their internal architecture. In some examples, the peer-to-peer data sharing bus 150 may be implemented using ZeroMQ and/or Apacke Kafka. In some examples, the peer- to-peer data sharing bus 150 may be based on one or more peer-to-peer networking protocols like Web Real-Time Communication (WebRTC) and/or one or more data sharing protocols like Google Remote Procedure Call (gRPC).

In some examples, when an Al language model shares information to one or more other Al languages models of different types, the chat mangers may change the format of the shared information, where Al language models don't need change the format of the shared information or reduce workload on changing the format.

In some examples, the first chat manager, such as chat manager 120-1, may receive information associated with a second AI language model shared by a second chat manager, such as chat manager 120-3. In some examples, the information may be shared via a peer-to-peer data sharing bus, such as bus 150. The format of the information shared by the second chat manager may have been changed by the second chat manager from a format of the second Al language model, such as Al language model 130-2 to a format of the first Al language mode, such as Al language model 130-1.

In some examples, the first chat manager, such as chat manager 120-1, may receive information shared by the first Al language model, such as Al language model 130-1, where the information is shared to the second Al language model, such as Al language model 130-2. The first chat manager may change the format of the information shared by the first Al language model from a format of the first Al language model to a format of the second Al language model, so that the second Al language model may understand the shared information. After the change of format, the first chat manager may send the information in the format of the second Al language model to the second chat manager, such as chat manager 120-3 coupled with the second Al language model. The second chat manager may further send the shared information to the second Al language model. In some examples, the first Al language model may be ChatGPT provided by Google and the second Al language model may be Gemini provided by Google.

In some examples, management on the chat including a plurality of users may be based on tokens. In some examples, a unique conversation token may be assigned to each participant, which may allow them to join or initiate conversations. The chat manager may verify the token before allowing a user to join the session. For example, Alice may initiate a conversation and receive a token. Then she may share this token with Bob, allowing him to join the conversation. The token may include a conversation identifier and a participant identifier, which the chat manager may use to control who is allowed to join the conversation. Bob may generate its own token based on the token shared by Alice, where the token generated by Bob may include the conversation identifier identifying the chat or conversation and a participant identifier identifying Bob.

In some examples, to improve secure transmission, the tokens may be encrypted and may contain encryption metadata. The chat manager may decrypt the tokens before allowing a participant to access the conversation, preventing unauthorized users from intercepting the token and joining the conversation. In some examples, tokens may be used to manage private sub-sessions, making each user's private session to remain isolated unless explicitly shared.

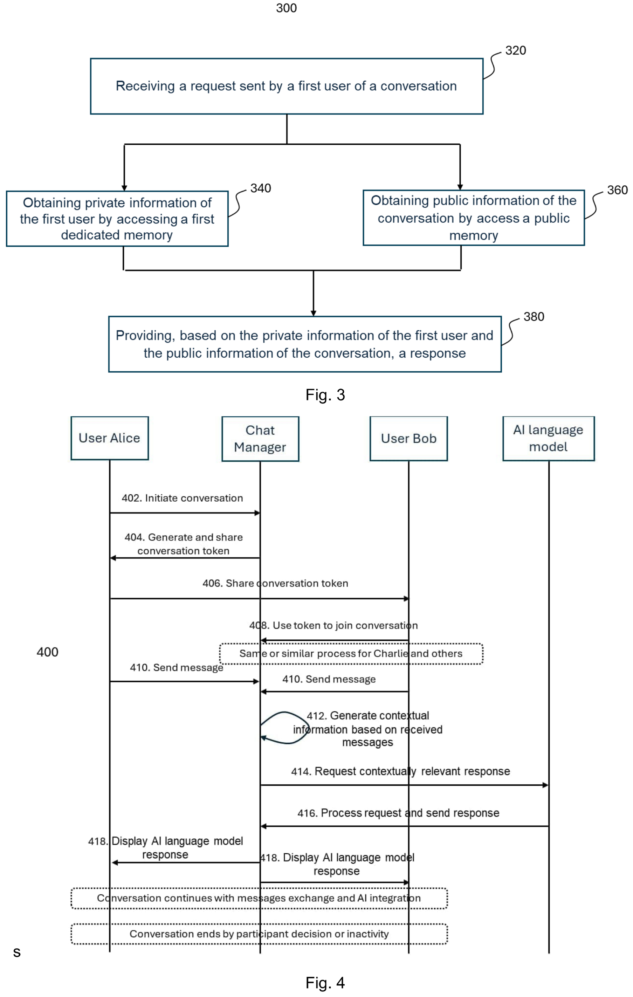

Fig. 3 shows an example of a method 300 of Al-based chat management.

In some examples, method 300 may comprise operations 320, 340 and 360. At operation 320, a chat manager, such as the chat manager 120 in Fig. 1, may receive a request sent by a first user of a conversation. At operation 340, the chat manager may obtain private information of the first user by accessing a first dedicated memory. At operation 360, the chat manager may obtain public information of the conversation by accessing a public memory. ssAt operation 380, the chat manager may provide, based on the private information of the first user and the public information of the conversation, a response.

In some examples, the response provided based on the private information of the first user and the public information of the conversation is without the privacy of the first user. For example, the privacy of the first user included in the private information of the first user may be removed to generate the response.

In some examples, to store the private information of the first user, the chat manager may create the first dedicated memory for the first user. In some examples, the chat manager may create a plurality of dedicated memories for a plurality of users. Besides the dedicated memory, the chat manager may further create a public memory for a plurality of or all users in the conversation to store public information of the users.

In some examples, method 300 may further comprise erasing the first dedicated memory in response to termination of the conversation. Erasing the first dedicated memory may cause private information of the first user to be deleted, so that the privacy of the first user may be protected.

In some examples, each of the private information and public information may correspond to a same session identifier of the conversation.

Fig. 4 shows an example of method 400 associated with Al-based chat management using tokens.

In some examples associated with Fig. 4, Alice, such as 110-1 in Fig. 1, may initiate a conversation with the chat manager, such as chat manager 120 in Fig. 2, at 402. The chat manager, which may also be called multi-user conversation manager or conversation manager, may generate a token for Alice in response to the initiation of the conversation at 404. At 404, the chat manager may further share the token to Alice. At 406, Alice may share the token to another user who may join the conversation. At 408, Bob may join the conversation using a token. In some examples, the token used by Bob to join the conversation may be generated by Bob based on the token shared by Alice. In some examples, Alice may further share the token to other users who may join the conversation, such as Charlie and Doug in Fig. 1. The other users may join the conversation in the way same to Bob.

Users in the conversation, such as Alice and Bob, may send messages to the chat manager at 410. The chat manager may generate some contextual information based on the received messages at 412. For example, contextual information may be generated by ordering and consolidating the received messages at 412. The ordering may be implemented based on time of receiving the messages and the consolidation may include deleting redundant information from the received messages and/or unifying the format of the messages. At 414, the chat manager may send the contextual information to an Al language model, such as model 130-1 in Fig. 1, to request a response associated with the contextual information from the Al language model.

The Al language model may process the contextual information and then send a response to the chat manager at 416. Then the chat manager may integrate the response into ongoing conversation visible to participants at 418. The integrated response may be displayed to users, such as Alice and Bob.

In some examples, the conversation may continue with message exchange, interaction with the Al language model and integration of response from the Al language model.

In some examples, the conversation or chat may end or be terminated. For example, the participants may choose to end the chat, or the chat may be terminated based on a detection indicating that the chat has been inactive for a period of time.

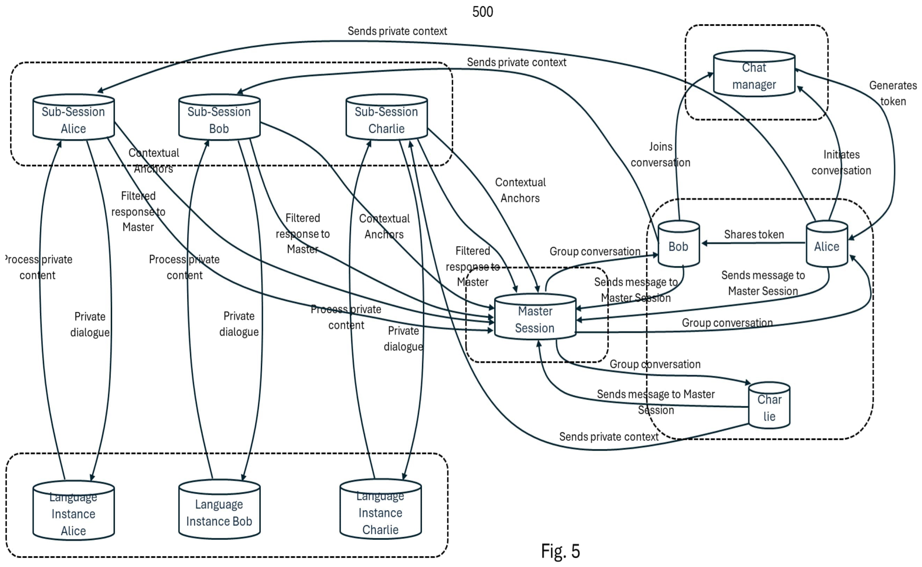

Fig. 5 shows an example of a method 500 associated with generation of adaptive responses in Al-based chat.

In some examples, for a chat joined by a plurality of users or participants, an Al language model may be configured to provide responses that consider some or all conversation history of the chat for relevance. In some examples, some specially tailored training for complex and multi-thread dialogues may be implemented to the Al language model. In some examples, the conversation history may cover the private conversations between different users.

In some examples as illustrated in Fig. 5, the chat manager, which may be the chat manager 120 in Fig. 1, may initiate the conversation flow and manage user access through tokens. Users may send messages to both the Master Session for group conversations and their respective Sub-Sessions for private context. In some examples, Sub-Sessions may serve as private channels for users to interact with their dedicated Al language instances. In some examples, Contextual Anchors is a mechanism linking Sub-Sessions to the Master Session, allowing for contextually relevant information to be shared with the group while maintaining privacy. In some examples, the Al language instances, such as instances Alice, Bob and Charlie, may process the private context exclusively corresponding to the instances and send filtered responses back to the Master Session, preventing sensitive information from being exposed. In some examples, the Master Session may display the group conversation to users in the chat, integrating responses from both the group dialogue and the filtered input from Sub-sessions. In some examples, an anchors method in Al area may explain individual predictions of any black box classification model by finding a decision rule that "anchors" the prediction sufficiently. A rule anchors a prediction if changes in other feature values do not affect the prediction. Anchors may utilize reinforcement learning techniques in combination with a graph search algorithm to reduce the number of model calls and hence the required runtime to a minimum while still being able to recover from local optima.

In some examples, the Al language model or instance may generate responses that account for all previous interactions within the conversation. This may include multi-threaded dialogues where different users may interact in both public and private contexts.

In some examples, when Alice asks a question in public conversation, the Al language model or instance may use inputs from previous interactions between Alice and Bob, even those in private sub-sessions, to generate a contextually relevant response.

In some examples, the chat manager may enable the Al language model to anchor responses on the conversation history, including private context, by providing a consolidated context to the Al model or instance that includes inputs from both public and private interactions.

In some examples, each conversation participant may be assigned a token to make their responses and inputs to be correctly sequenced and integrated into the group or private conversation. The token-based session management may control access to the conversation, allowing for flexible joining and leaving of participants based on their privileges.

In some examples, an Al language instance is a specific example or implementation of an Al language model.

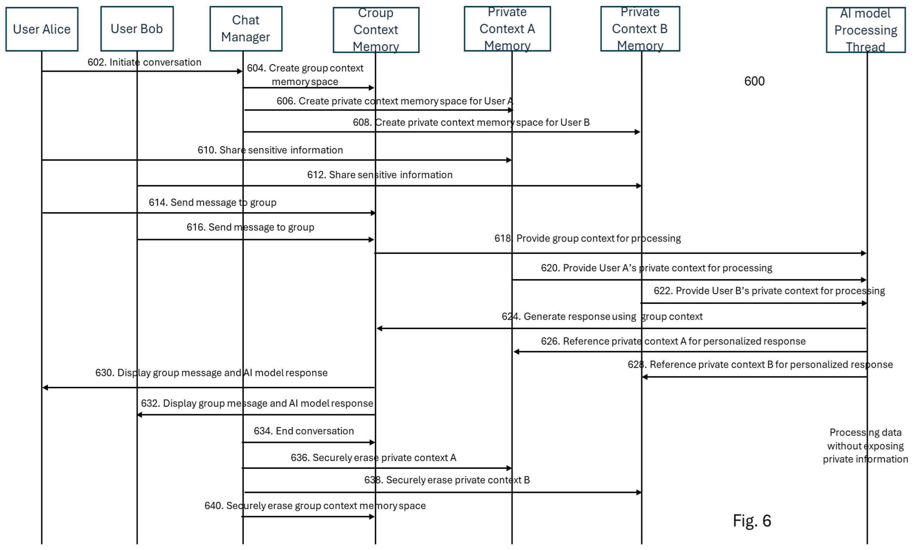

Fig. 6 shows an example of method 600 associated with memory and data management in Al-based chat.

In some examples, user Alice may initiate a conversation based on communication with a chat manager, such as manager 120 in Fig. 1, at 602. The chat manager may create group context memory space at 604, create private context memory space for user A at 606 and create private context memory space for user B at 608. All the space may be created for the conversation, which may include a public group and a plurality of private groups or sessions. In some examples, the group context memory may be or be an example of the public memory associated with Fig. 3. In some examples, the private context memory may be or be an example of a dedicated memory for a user associated with Fig. 3.

In some examples, user Alice may share sensitive information to the private context memory space created for user A at 610. In some examples, user Bob may share sensitive information to the private context memory space created for user B at 612. In some examples, the sensitive information may be shared via private sessions or private groups. Group context may be provided from the group context memory to Al model processing thread for processing at 618, where the providing may be performed by the chat manager. The group context may be public information or context provided by one or more users, such as Alice and Bob. In some examples, user A's private context may be provided from the private context A memory to the Al model processing thread for processing at 620. The providing may be implemented by the chat manager in some examples. User A may refer to user Alice and user A' private context may be based on sensitive information shared at 610. In some examples, user B's private context may be provided from the private context B memory to the Al model processing thread for processing at 622. The providing may be implemented by the chat manager in some examples. User B may refer to user Bob and user B' private context may be based on sensitive information shared at 612.

In some examples, the Al model processing thread may generate, at 624, a response using group context received at 618. The generated response may be sent to the group context memory. In some examples, Al model processing thread may generate a response referencing user A's private context and send the response to the private context A memory at 626. The response may be a personalized response for user A. In some examples, Al model processing thread may generate a response referencing user B's private context and send the response to the private context B memory at 628. The response may be a personalized response for user B. In some examples, the group context may be or be an example of the public information associated with Fig. 3. In some examples, the private context may be or be an example of the private information associated with Fig. 3.

In some examples, the chat manager may display group messages received from users, such as user Alice and/or Bob, and Al model responses, such as the response received at 624, respectively to user Alice and user Bob at 630 and 632. In some examples, the Al model responses displayed to user Alice at 630 may further include response received at 626 and Al model responses displayed to user Alice at 632 may further include response received at 628. In some examples, the chat manager may end the conversation initiated at 602. After the conversation is ended, the chat manager may erase private context A stored in private context A memory at 636. The chat manager may further erase private context B stored in private context B memory at 638 and erase group context memory space in the group context memory at 640.

The sequence of operations in methods, such as method 600, in some or each example may be determined by the nature of the technology and corresponding features may just illustrate one of a plurality of possible examples having different sequences.

In some examples of a single-user chat scenario, an Al language model may maintain context within a transient memory window, which may be updated with each interaction through Graphic User Interface (GUI) interactions or application programming interface (API). This memory window may hold the immediate conversation history, allowing the Al language model to generate relevant responses. User configuration information, such as preferences or settings, may often be stored separately and used to provide additional context to the Al language model. However, it cannot be specific to any single conversation in some examples.

In some examples of multi-user chat scenario, managing a multi-user chat with selective sharing of sensitive information may require dedicated memory spaces, private contextual stores, reference mechanism, session binding, data segregation, dynamic context management, and/or cleanup and security.

In some examples of Dedicated Memory Spaces, the Al language model may allocate dedicated memory spaces or "context windows" for the group conversation and for each individual's private context. These spaces may be dynamically created upon the initiation of a chat and disposed of when the chat ends to protect privacy.

In some examples of Private Contextual Stores, when a user shares sensitive information, the Al language model may store this data in a private contextual store associated with the user's sub-session. This store may be separate from the main conversation context and cannot be accessible to other users in some examples.

In some examples of Reference Mechanism, the Al language model may use a reference mechanism to access the private contextual stores during the conversation. When generating responses for the group chat, the Al language model may draw on this private information without revealing it directly, using it to inform its responses in a way that is relevant to the shared context but does not compromise privacy.

In some examples of Session Binding, sensitive information shared by users may be bound to the specific multi-user chat session rather than being stored as general user preferences. This may allow that the information is only used within the context of the relevant group conversation and is not inadvertently applied to other interactions.

In some examples of Data Segregation, sensitive data may be segregated from general user data, using access controls to prevent unauthorized access or leakage between sessions. This may involve encryption, access tokens, and strict data handling policies.

In some examples of Dynamic Context Management, the Al language model dynamically manages the context within each memory window, updating it with each new message or piece of shared information. This may allow the Al language model to maintain a coherent thread of conversation while also being able to reference private context as needed.

In some examples of Cleanup and Security, after the conversation concludes or ends, the system may erase the dedicated memory spaces and private contextual stores to protect user privacy. This cleanup process may be automatic and comply with data protection standards.

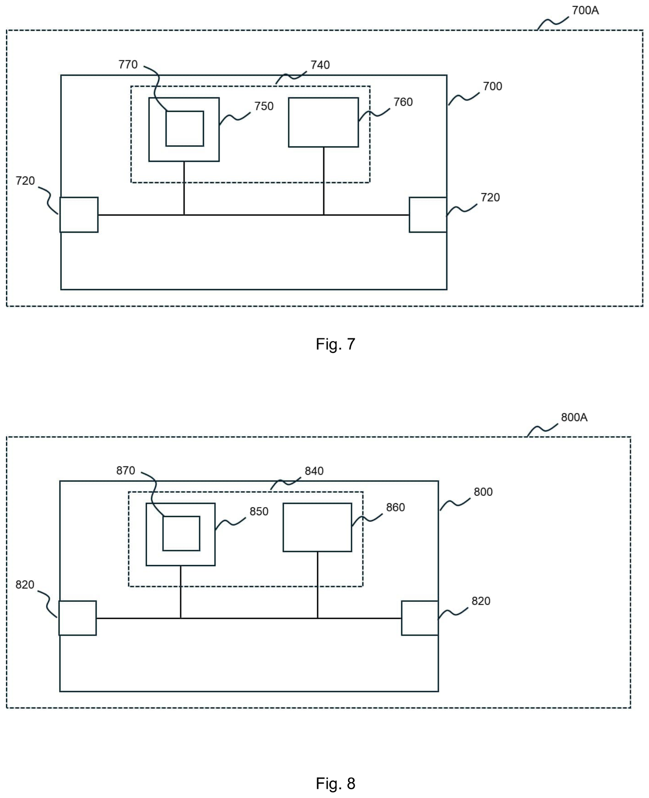

Fig. 7 shows a block diagram of an example of apparatus 700. In some examples, apparatus 700 may be the chat manager in some or all examples, such as chat manager in or associated with Figs. 1 to 6. In some examples, apparatus 700 may be configured to implement each and every operation or feature of the chat manager. For example, apparatus 700 may be configured to implement method 200 and/or method 300.

In some examples, apparatus 700 may include interfaces 720, such as 720a and 720b, and processing circuitry 740. Apparatus 700 may be configured to implement, based on the cooperations between one or more tangible computer-readable ("machine-readable") non-transitory storage media 750 and one or more processors 760 of the processing circuitry 740, operations and/or functionalities described with reference to the Figs. 1 to 6, and/or one or more operations described herein, which are associated with chat manager, such as chat manager 120.

In some examples, apparatus 700 may perform the above implementations when the computer-executable instructions, such as the logic or computer program 770, are executed by one or more processors 760. In some examples, the interfaces 720 are interface means 720 and the processing circuitry 740 is processing means 740. In some examples, apparatus 600 may be in a computer system 700A which may include other apparatuses.

In some examples, interfaces 720 may be configured to communicate with other entities. For example, the entities may be entities in systems 100 A to C. In some examples, interfaces 720 may include one or more wireless interfaces including antennas, such as MIMO antennas, and/or wired interfaces, such as USB serial interfaces and/or RJ45 interfaces. The wireless interfaces may be configured to transmit and/or receive Wi-Fi signals, 3GPP signals and/or other wireless signals. The wired interfaces may be configured to receive signals transmitted via fiber, coaxial cables and other media.

In some examples, one or more processors 760 may be General Purpose CPUs, Mobile Processors, Server and Data Center Processors, Embedded Processors, Graphics Processing Units (GPUs), Specialized Processors, Microcontrollers, Field-Programmable Gate Arrays (FPGAs), Digital Signal Processors (DSPs), application-specific integrated circuits (ASICs), integrated circuits (ICs) and/or other circuitries having the capability of performing the operations of the controller in each and every example of this disclosure.

In some examples, the phrase "computer-readable non-transitory storage media" may be directed to include all machine and/or computer readable media, with the sole exception being a transitory propagating signal.

In some examples, the storage media 750 may include one or more types of computer-readable storage media capable of storing data, including volatile memory, non-volatile memory, removable or non-removable memory, erasable or non-erasable memory, writeable or re-writeable memory, and the like. For example, storage media 750 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some examples, the logic or computer program 770 may include instructions, data, and/or code, which, if executed by a machine, such as implemented by one or more processors in an apparatus, may cause the machine to perform a method, process, and/or operations as described herein, such as the examples, operations and/or functionalities comprises the examples, operations and/or functions of the chat manager associated with Figs. 1 to 6. The machine may include, for example, any suitable processing platform, computing platform, computing device, processing device, computing system, processing system, computer, processor, or the like, and may be implemented using any suitable combination of hardware, software, firmware, and the like.

In some examples, each of components 720, 740, 750, 760 and 770 in the apparatus 700 may be implemented by a corresponding means capable of implementing the functions of the above components. In some examples, storage media 750 is not included in apparatus 700 because processors 760 may read logic or computer program 770 from a storage media out of the apparatus 700.

In some examples, the logic or computer program 770 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner, or syntax, for instructing a processor to perform a certain function. The instructions may be implemented using any suitable high-level, low-level, object- oriented, visual, compiled and/or interpreted programming language, such as C, C++, Java, BASIC, Matlab, Pascal, Visual BASIC, assembly language, machine code, and the like.

In some examples, interfaces720, storage media 750 and processors 760 communicate with each other via bus. In some other examples, some of these entities have direct communicative connections with each other.

Fig. 8 shows a block diagram of an example of apparatus 800. In some examples, apparatus 800 may be the Al language model or instance in some or all examples, such as Al language model or instance in or associated with Figs. 1 to 6. In some examples, apparatus 800 may be configured to implement each and every operation or feature of the Al language model or instance.

In some examples, apparatus 800 may include interfaces 820, such as 820a and 820b, and processing circuitry 840. Apparatus 800 may be configured to implement, based on the cooperations between one or more tangible computer-readable ("machine-readable") non-transitory storage media 850 and one or more processors 860 of the processing circuitry 840, operations and/or functionalities described with reference to the Figs. 1 to 6, and/or one or more operations described herein, which are associated with Al language model or instance, such as Al language model 130.

In some examples, apparatus 800 may perform the above implementations when the computer-executable instructions, such as the logic or computer program 870, are executed by one or more processors 860. In some examples, the interfaces 820 are interface means 820 and the processing circuitry 840 is processing means 840. In some examples, apparatus 800 may be in a computer system 800A which may include other apparatuses.

In some examples, interfaces 820 may be configured to communicate with other entities. For example, the entities may be entities in systems 100 A to C. In some examples, interfaces 820 may include one or more wireless interfaces including antennas, such as MIMO antennas, and/or wired interfaces, such as USB serial interfaces and/or RJ45 interfaces. The wireless interfaces may be configured to transmit and/or receive Wi-Fi signals, 3GPP signals and/or other wireless signals. The wired interfaces may be configured to receive signals transmitted via fiber, coaxial cables and other media.

In some examples, one or more processors 860 may be General Purpose CPUs, Mobile Processors, Server and Data Center Processors, Embedded Processors, Graphics Processing Units (GPUs), Specialized Processors, Microcontrollers, Field-Programmable Gate Arrays (FPGAs), Digital Signal Processors (DSPs), application-specific integrated circuits (ASICs), integrated circuits (ICs) and/or other circuitries having the capability of performing the operations of the controller in each and every example of this disclosure.

In some examples, the phrase "computer-readable non-transitory storage media" may be directed to include all machine and/or computer readable media, with the sole exception being a transitory propagating signal.

In some examples, the storage media 850 may include one or more types of computer-readable storage media capable of storing data, including volatile memory, non-volatile memory, removable or non-removable memory, erasable or non-erasable memory, writeable or re-writeable memory, and the like. For example, storage media 850 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some examples, the logic or computer program 870 may include instructions, data, and/or code, which, if executed by a machine, such as implemented by one or more processors in an apparatus, may cause the machine to perform a method, process, and/or operations as described herein, such as the examples, operations and/or functionalities comprises the examples, operations and/or functions of the Al language model associated with Figs. 1 to 6. The machine may include, for example, any suitable processing platform, computing platform, computing device, processing device, computing system, processing system, computer, processor, or the like, and may be implemented using any suitable combination of hardware, software, firmware, and the like.

In some examples, each of components 820, 840, 850, 860 and 870 in the apparatus 800 may be implemented by a corresponding means capable of implementing the functions of the above components. In some examples, storage media 850 is not included in apparatus 800 because processors 860 may read logic or computer program 870 from a storage media out of the apparatus 800.

In some examples, the logic or computer program 870 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner, or syntax, for instructing a processor to perform a certain function. The instructions may be implemented using any suitable high-level, low-level, object- oriented, visual, compiled and/or interpreted programming language, such as C, C++, Java, BASIC, Matlab, Pascal, Visual BASIC, assembly language, machine code, and the like.

In some examples, interfaces820, storage media 850 and processors 860 communicate with each other via bus. In some other examples, some of these entities have direct communicative connections with each other.

In the following, some examples of a proposed concept are presented.

An example (e.g., example 1) relates to a computer-readable medium including computer-readable instructions, when executed, to implement a method. The method may comprise generating, based on messages from a plurality of users in a conversation over a period of time, contextual information of the plurality of users. The method may further comprise sending the contextual information of the plurality of users to a first artificial intelligence (AI) language model. Furthermore, the method may comprise sending a request to the first Al language model, wherein the request requires a response associated with the contextual information.

An example (e.g., example 2) relates to a previously described example (e.g., example 1) or to any of the examples described herein, where the method may further comprise receiving a first request for starting the conversation for the first user; assigning a first token corresponding to the conversation to the first user; receiving a second request for joining the conversation for the second user, wherein the second request comprises a second token; and determining, based on the second token comprised in the second request, whether the second user is allowed to join the conversation, wherein the first user and the second user are of the plurality of users.

An example (e.g., example 3) relates to a previously described example (e.g., examples 1 or 2) or to any of the examples described herein, where the method further comprise receiving a response corresponding to request from the first Al language model; and sending the response to the plurality of users respectively.

An example (e.g., example 4) relates to a previously described example (e.g., any one of examples 1 to 3) or to any of the examples described herein, where the contextual information of the plurality of users is generated based on time sequence of receiving the messages from the plurality of users and/or meaning of the messages from the plurality of users; and where the response associated with the contextual information is edited, such as re-organized, summarized and/or anticipated, information based on the contextual information.

An example (e.g., example 5) relates to a previously described example (e.g., example 2) or to any of the examples described herein, where each of the first token and the second token comprises a section of conversation identifier and a section of participant identifier.

An example (e.g., example 6) relates to a previously described example (e.g., examples 2 or 5) or to any of the examples described herein, where each of the first token and the second token is encrypted and wherein each token comprises encryption metadata for decrypting the token.

An example (e.g., example 7) relates to a previously described example (e.g., any one of example 1 to 6) or to any of the examples described herein, where the period of time starts at commence of the conversation, or starts at a time point between commence and end of the conversation.

An example (e.g., example 8) relates to a previously described example (e.g., any one of example 1 to 7) or to any of the examples described herein, where the method may further comprise establishing a plurality of sub-sessions coupling the plurality of users respectively with a plurality of dedicated Al language model instances.

An example (e.g., example 9) relates to a previously described example (e.g., example 8) or to any of the examples described herein, where the method may further comprise sending private contextual information of each of the plurality of users to a corresponding dedicated Al language model instance through a corresponding sub-session of each of the plurality of sub-sessions.

An example (e.g., example 10) relates to a previously described example (e.g., example 9) or to any of the examples described herein, where the method may further comprise receiving a plurality of responses sent by the plurality of dedicated Al language model instances through the plurality of sub-sessions; and importing the plurality of responses to a public session holding chat messages available to a plurality of users in the conversation.

An example (e.g., example 11) relates to a previously described example (e.g., example 10) or to any of the examples described herein, where importing the plurality of responses to a public session may comprise sanitizing the plurality of responses; and merging the sanitized responses with public messages from the users in the public session.

An example (e.g., example 12) relates to a previously described example (e.g., any one of examples 9 to 11) or to any of the examples described herein, where the method may further comprise determining, based on a semantic analysis, the private contextual information of the plurality of users from overall information sent from the plurality of users.

An example (e.g., example 13) relates to a previously described example (e.g., any one of examples 1 to 12) or to any of the examples described herein, where the method may further comprise allocating a shared memory for public contextual information from the plurality of users in the conversation; and allocating a plurality of dedicated memories for each of the plurality of users in the conversation for respectively storing private contextual information of the plurality of users.

An example (e.g., example 14) relates to a previously described example (e.g., example 13) or to any of the examples described herein, wherein the method may further comprise receiving an access request for accessing a first dedicated memory of the first user from the first Al language model; determining that the access request is for generating a response to a request by the first user; and allowing, based on the determination, access to the first dedicated memory.

An example (e.g., example 15) relates to a previously described example (e.g., examples 13 or 14) or to any of the examples described herein, where the method may further comprise deleting, responsive to termination of the conversation, private contextual information of the plurality of users stored in the plurality of dedicated memories.

An example (e.g., example 16) relates to a previously described example (e.g., any one of examples 1 to 15) or to any of the examples described herein, where the method may comprise receiving information shared by a second AI language model; and sending the information shared by the second Al language model to the first Al language model.

An example (e.g., example 17) relates to a previously described example (e.g., example 16) or to any of the examples described herein, where the method may comprise receiving information shared by the first Al language model; and sending the information shared by the first Al language model to a second AI language model.

An example (e.g., example 18) relates to a previously described example (e.g., any one of examples 1 to 15) or to any of the examples described herein, where the method may further comprise receiving, by a first chat manager, information associated with a second AI language model shared by a second manager.

An example (e.g., example 19) relates to a previously described example (e.g., example 18) or to any of the examples described herein, where the information shared by the second chat manager is received via a peer-to-peer data sharing bus coupled with the first chat manager and the second chat manager.

An example (e.g., example 20) relates to a previously described example (e.g., examples 18 or 19) or to any of the examples described herein, where the method may comprise receiving, by the first chat manager, from the first Al language model information in a format corresponding to the first Al language model; change the information in the format corresponding to the first Al language model into information in a format corresponding to the second Al language model; and sending the changed information in the format corresponding to the second Al language model to the second chat manager.

An example (e.g., example 21) relates to a previously described example (e.g., any one of examples 1 to 20) or to any of the examples described herein, where the first Al language model is a Large Language Model (LLM).

An example (e.g., example 22) relates to a computer-readable medium including computer-readable instructions, when executed, to implement a method. The method may comprise receiving a request sent by a first user of a conversation; obtaining private information of the first user by accessing a first dedicated memory; obtaining public information of the conversation by accessing a public memory; and providing, based on the private information of the first user and the public information of the conversation, a response.

An example (e.g., example 23) relates to a previously described example (e.g., example 22) or to any of the examples described herein, where the response is without the privacy of the first user.

An example (e.g., example 24) relates to a previously described example (e.g., examples 22 or 23) or to any of the examples described herein, where the method may further comprise creating a group context memory space for group context; and creating a first private context memory space for the first user.

An example (e.g., example 25) relates to a previously described example (e.g., any one of examples 22 to 24) or to any of the examples described herein, the method may further comprise erasing the first private context memory space in response to termination of the conversation.

An example (e.g., example 26) relates to a previously described example (e.g., any one of examples 22 to 25) or to any of the examples described herein, where each of the private information and public information corresponds to a same session identifier of the conversation.

An example (e.g. example 27) relates to an apparatus 700 comprising an interface 720 and a processing circuitry 740. Apparatus 700 comprises machine-readable instructions 770. The processing circuitry 740 is configured with a trusted execution environment to execute the machine-readable instructions 770 inside the trusted execution environment to generate, based on messages from a plurality of users in a conversation over a period of time, contextual information of the plurality of users; send the contextual information of the plurality of users to a first artificial intelligence (AI) language model; and send a request to the first Al language model, wherein the request requires a response associated with the contextual information.

An example (e.g. example 28) relates to an apparatus 700 comprising an interface 720 and a processing circuitry 740. Apparatus 700 comprises machine-readable instructions 770. The processing circuitry 740 is configured with a trusted execution environment to execute the machine-readable instructions 770 inside the trusted execution environment to implement the method of or associated with any one of examples 1 to 21.

An example (e.g. example 29) relates to an apparatus 700 comprising an interface 720 and a processing circuitry 740. Apparatus 700 comprises machine-readable instructions 770. The processing circuitry 740 is configured with a trusted execution environment to execute the machine-readable instructions 770 inside the trusted execution environment, where the machine-readable instructions 770 may be the computer-readable instructions stored in computer-readable medium of any one of examples 1 to 21.

An example (e.g. example 30) relates to an apparatus 800 comprising an interface 820 and a processing circuitry 840. Apparatus 800 comprises machine-readable instructions 870. The processing circuitry 840 is configured with a trusted execution environment to execute the machine-readable instructions 870 inside the trusted execution environment to receive a request sent by a first user of a conversation; obtain private information of the first user by accessing a first dedicated memory; obtain public information of the conversation by accessing a public memory; and provide, based on the private information of the first user and the public information of the conversation, a response.

An example (e.g. example 31) relates to an apparatus 800 comprising an interface 820 and a processing circuitry 840. Apparatus 800 comprises machine-readable instructions 870. The processing circuitry 840 is configured with a trusted execution environment to execute the machine-readable instructions 870 inside the trusted execution environment to implement the method of or associated with any one of examples 22 to 26.

An example (e.g. example 32) relates to an apparatus 800 comprising an interface 820 and a processing circuitry 840. Apparatus 800 comprises machine-readable instructions 870. The processing circuitry 840 is configured with a trusted execution environment to execute the machine-readable instructions 870 inside the trusted execution environment, where the machine-readable instructions 870 may be the computer-readable instructions stored in computer-readable medium of any one of examples 22 to 26.

An example (e.g., example 33) relates to a system comprising the apparatus 700 according to any one of examples 27 to 29, or according to any other example.

An example (e.g., example 34) rsselates to a system comprising the apparatus 800 according to any one of examples 30 to 32, or according to any other example.

An example (e.g., example 35) relates to a computer program having a program code for performing the method of one of the examples 1 to 21 (or according to any other example) when the computer program is executed on a computer, a processor, or a programmable hardware component.

An example (e.g., example 36) relates to a computer program having a program code for performing the method of one of the examples 22 to 26 (or according to any other example) when the computer program is executed on a computer, a processor, or a programmable hardware component.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and sub-combinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A computer-readable medium including computer-readable instructions, when executed, to implement a method, comprising:
generating, based on messages from a plurality of users in a conversation over a period of time, contextual information of the plurality of users;
sending the contextual information of the plurality of users to a first artificial intelligence (AI) language model of the conversation, wherein the contextual information is sent as input for training the first Al language model; and
sending, after transmission of the contextual information of the plurality of users, a request to the first Al language model, wherein the request requires a response associated with the contextual information.

2. The computer-readable medium of claim 1, wherein the method further comprises:
receiving a first request for starting the conversation for the first user;
assigning a first token corresponding to the conversation to the first user;
receiving a second request for joining the conversation for the second user, wherein the second request comprises a second token; and
determining, based on the second token comprised in the second request, whether the second user is allowed to join the conversation, wherein the first user and the second user are of the plurality of users.

3. The computer-readable medium of claim 1 or 2, wherein the method further comprises:
receiving a response corresponding to request from the first Al language model; and
sending the response to the plurality of users respectively.

4. The computer-readable medium of any one of claims 1 to 3,
wherein the contextual information of the plurality of users is generated based on time sequence of receiving the messages from the plurality of users and/or meaning of the messages from the plurality of users; and
wherein the response associated with the contextual information is edited information based on the contextual information.

5. The computer-readable medium of any one of claims 1 to 4, wherein each of the first token and the second token comprises a section of conversation identifier and a section of participant identifier.

6. The computer-readable medium of any one of claims 1 to 5, wherein each of the first token and the second token is encrypted and wherein each token comprises encryption metadata for decrypting the token.

7. The computer-readable medium of any one of claims 1 to 6, wherein the period of time starts at commence of the conversation, or starts at a time point between commence and end of the conversation.

8. The computer-readable medium of any one of claims 1 to 7, wherein the method further comprises: establishing a plurality of sub-sessions coupling the plurality of users respectively with a plurality of dedicated Al language model instances.

9. The computer-readable medium of claim 8, wherein the method further comprises:
sending private contextual information of each of the plurality of users to a corresponding dedicated Al language model instance through a corresponding sub-session of each of the plurality of sub-sessions.

10. The computer-readable medium of claim 9, wherein the method further comprises:
receiving a plurality of responses sent by the plurality of dedicated Al language model instances through the plurality of sub-sessions; and
importing the plurality of responses to a public session holding chat messages available to a plurality of users in the conversation.

11. The computer-readable medium of claim 10, wherein importing the plurality of responses to a public session comprises:
sanitizing the plurality of responses; and
merging the sanitized responses with public messages from the users in the public session.

12. The computer-readable medium of any one of claims 9 to 11, wherein the method further comprises: determining, based on a semantic analysis, the private contextual information of the plurality of users from overall information sent from the plurality of users.

13. The computer-readable medium of any one of claims 1 to 12, wherein the method further comprises:
allocating a shared memory for public contextual information from the plurality of users in the conversation; and
allocating a plurality of dedicated memories for each of the plurality of users in the conversation for respectively storing private contextual information of the plurality of users.

14. The computer-readable medium of claim 13, wherein the method further comprises:
receiving an access request for accessing a first dedicated memory of the first user from the first Al language model;
determining that the access request is for generating a response to a request by the first user; and
allowing, based on the determination, access to the first dedicated memory.

15. A method, comprising:
generating, based on messages from a plurality of users in a conversation over a period of time, contextual information of the plurality of users;
sending the contextual information of the plurality of users to a first artificial intelligence (AI) language model of the conversation, wherein the contextual information is as input for training the first Al language model; and
sending, after transmission of the contextual information, a request to the first Al language model, wherein the request requires a response associated with the contextual information.
